(19) Europäisches Patentamt / European Patent Office / Office européen des brevets

(11) **EP 4 617 735 A1**

(12) **EUROPEAN PATENT APPLICATION**

(43) Date of publication:
**17.09.2025 Bulletin 2025/38**

(21) Application number: **25163327.7**

(22) Date of filing: **12.03.2025**

(51) International Patent Classification (IPC):
**G01V 20/00** (2024.01)

(52) Cooperative Patent Classification (CPC):
**G01V 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.03.2024 US 202463564254 P**

(71) Applicants:
- **Services Pétroliers Schlumberger**
  **75007 Paris (FR)**
  Designated Contracting States:
  **FR**

- **GeoQuest Systems B.V.**
  **2514 JG The Hague (NL)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventor: **BAGAINI, Claudio**
  **11100 Aosta (IT)**

(74) Representative: **Schlumberger Intellectual Property Department**
  **Parkstraat 83**
  **2514 JG Den Haag (NL)**

(54) **A SEASONAL DEPENDENT MODEL FOR THE SPEED OF SOUND**

(57) A method for generating a model for a water velocity in an ocean includes receiving input data. The method also includes determining a time-averaged water velocity as a function of depth based upon the input data. The method also includes determining a threshold depth based upon the time-averaged water velocity. The method also includes determining a polynomial based upon the threshold depth. The method also includes determining the water velocity in the ocean as a function of time and depth based upon the polynomial. The method also includes generating or updating the model based upon the water velocity as the function of time and depth.

1600

| | |
|---|---|
| RECEIVING INPUT DATA | 1605 |
| DETERMINING A TIME-AVERAGED WATER VELOCITY AS A FUNCTION OF DEPTH BASED UPON THE INPUT DATA | 1610 |
| DETERMINING A THRESHOLD DEPTH BASED UPON THE TIME-AVERAGED WATER VELOCITY | 1615 |
| DETERMINING A MINIMUM ORDER OF A POLYNOMIAL BASED UPON THE THRESHOLD DEPTH | 1620 |
| SPLITTING THE POLYNOMIAL INTO FIRST AND SECOND POLYNOMIALS | 1625 |
| MULTIPLYING COEFFICIENTS OF LOW-ORDER TERMS OF THE FIRST AND/OR SECOND POLYNOMIALS BY FUNCTIONS THAT PROVIDE TIME MODULATION TO PRODUCE A WATER VELOCITY AS A FUNCTION OF TIME AND DEPTH | 1630 |
| GENERATING OR UPDATING A SEASONAL-DEPENDENT MODEL BASED UPON THE WATER VELOCITY AS THE FUNCTION OF TIME AND DEPTH | 1635 |
| DISPLAYING AN OUTPUT OF THE SEASONAL-DEPENDENT MODEL | 1640 |
| PERFORMING AN ACTION IN RESPONSE TO THE OUTPUT | 1645 |

**FIG. 16**

EP 4 617 735 A1

## Description

**Cross-Reference to Related Applications**

This application claims priority to U.S. Provisional Patent Application No. 63/564,254, filed on March 12, 2024, which is incorporated by reference.

## Background

The spatio-temporal variation of the speed of sound in the ocean (i.e., water velocity) is a perturbation that affects the quality of the seismic images obtained from data acquired in deep waters. In the case of ocean bottom node (OBN) acquisitions, the presence of two other uncertainties in the acquisition parameters (e.g., receiver position and clock-drift) make their estimation challenging. Conventional methods to estimate these perturbations often rely on an initial velocity model, which is depth-dependent but constant over time. The seismic exploration community, when processing seismic data acquired in deep water, routinely uses a velocity profile that is often considered the best available approximation of the depth-dependent water velocity.

The Advocate-Hood (A-H) velocity profile is used for data acquired in, for example, the Gulf of Mexico. However, it has been determined that the deeper part of the A-H model overestimates the water velocity, whereas the water velocity in the seasonal thermocline layer is up to 2 m/s lower than what these recent measurements indicate. Thus, there is a need for a new model to determine the speed of sound, especially in deep water, including, the potential to take into account average seasonal variations.

## Summary

A method for generating a model for a water velocity in an ocean is disclosed. The method includes receiving input data. The method also includes determining a time-averaged water velocity as a function of depth based upon the input data. The method also includes determining a threshold depth based upon the time-averaged water velocity. The method also includes determining a polynomial based upon the threshold depth. The method also includes determining the water velocity in the ocean as a function of time and depth based upon the polynomial. The method also includes generating or updating the model based upon the water velocity as the function of time and depth.

A computing system is also disclosed. The computing system includes one or more processors and a memory system. The memory system includes one or more non-transitory computer-readable media storing instructions that, when executed by at least one of the one or more processors, cause the computing system to perform operations. The operations include receiving input data. The input data includes water velocity measurements in a prospect area in an ocean. The water velocity measurements are captured directly or determined based upon seismic data. The operations also include determining a time-averaged water velocity as a function of depth based upon the input data. The operations also include determining a threshold depth based upon the time-averaged water velocity. Temporal variations of the time-averaged water velocity are less than a predetermined threshold below the threshold depth. The operations also include determining a minimum order of a polynomial based upon the threshold depth. The minimum order of the polynomial is a polynomial approximation of the time-averaged water velocity within a predetermined error. The operations also include splitting the polynomial approximation into first and second polynomials. The first polynomial has high-order terms that are higher than a predetermined order, and the second polynomial has low-order terms that are lower than the predetermined order. The operations also include multiplying coefficients of the low-order terms by functions that provide time modulation to produce a water velocity as a function of time and depth. The functions are derived imposing a continuity of the water velocity as the function of time and depth and its derivative at the threshold depth. The operations also include generating or updating a seasonal-dependent model based upon the water velocity as the function of time and depth.

A non-transitory computer-readable medium is also disclosed. The medium stores instructions that, when executed by one or more processors of a computing system, cause the computing system to perform operations. The operations include receiving input data. The input data includes water velocity measurements in a prospect area in an ocean. The water velocity measurements are captured directly or determined based upon seismic data. The operations also include determining a time-averaged water velocity as a function of depth based upon the input data. The operations also include determining a threshold depth based upon the time-averaged water velocity. Temporal variations of the time-averaged water velocity are less than a predetermined threshold below the threshold depth. The operations also include determining a minimum order of a polynomial based upon the threshold depth. The minimum order of the polynomial is a polynomial approximation of the time-averaged water velocity within a predetermined error. The operations also include splitting the polynomial approximation into first and second polynomials. The first polynomial has high-order terms that are higher than a predetermined order, and the second polynomial has low-order terms that are lower than the predetermined order. The predetermined order is equal to or greater than two. The operations also include multiplying coefficients of the low-order terms by functions that provide time modulation to produce a water velocity as a function of time and depth. The functions are derived imposing a continuity of the water velocity as the function of time and depth and its derivative at the threshold depth. The functions are also derived based upon shallow-water velocity variations and the threshold depth. The water velocity as the function of time and depth comprises a sum of: (1) a first of the coefficients of the low-order terms multiplied by a first co-sinusoidal function of time, (2) a second of the coefficients of the low-order terms multiplied by a second co-sinusoidal function of time and by the depth, (3) a third of the coefficients of the low-order terms multiplied by a third co-sinusoidal function of time and by depth squared, and (4) the high-order terms, which include coefficients that are a function of depth but not time. The first co-sinusoidal function of time is depth-independent. The operations also include generating or updating a seasonal-dependent model based upon the water velocity as the function of time and depth.

It will be appreciated that this summary is intended merely to introduce some aspects of the present methods, systems, and media, which are more fully described and/or claimed below. Accordingly, this summary is not intended to be limiting.

**Brief Description of the Drawings**

The accompanying drawings, which are incorporated in and constitute a part of this specification, illustrate embodiments of the present teachings and together with the description, serve to explain the principles of the present teachings. In the figures:

**Figure 1** depicts an example computing system, according to an embodiment.
**Figure 2** illustrates a drilling operation being performed by drilling tools suspended by rig and advanced into subterranean formations to form wellbore, according to an embodiment.
**Figure 3** illustrates a wireline operation being performed by wireline tool suspended by rig and into wellbore of **Figure 2.**
**Figure 4** illustrates a schematic view, partially in cross section of oilfield having data acquisition tools positioned at various locations along oilfield for collecting data of subterranean formation, according to an embodiment.
**Figure 5** illustrates an oilfield for performing production operations, according to an embodiment.
**Figures 6A-6C** illustrate graphs showing measured water velocities (**Figure 6A**), calculated water velocities (**Figure 6B**), and salinity (**Figure 6C**), according to an embodiment.
**Figures 7A-7C** illustrate graphs showing measured water velocities (**Figure 7A**), calculated water velocities (**Figure 7B**), and salinity (**Figure 7C**), according to an embodiment.
**Figures 8A** and **8B** illustrate histograms showing the difference between water velocity measured with a time-of-flight sensor and computed with PTC measurements, according to an embodiment.
**Figures 9A** and **9B** illustrate graphs showing shallow water velocity obtained with PCT measurements (**Figure 9A**) and time-of-flight measurements (**Figure 9B**), according to an embodiment.
**Figure 10** illustrates water velocity profiles obtained during one or more (e.g., five) surveys, according to an embodiment.
**Figure 11** illustrates a close-up version of **Figure 10** for water depth down between 0 m and 600 m, according to an embodiment.
**Figures 12A** and **12B** illustrate the average water velocity measured in the shallow part of the seasonal thermocline layer (e.g., 10-80 m) in two surveys in winter 2022 (**Figure 12A**) and winter 2023 (**Figure 12B**), according to an embodiment.
**Figure 13** illustrates seasonal-dependent water velocity profiles for the Gulf of Mexico according to the model in equation (1), according to an embodiment.
**Figures 14A** and **14B** illustrate daily variations of the water temperature (**Figure 14A**) and average water velocity (**Figure 14B**), according to an embodiment.
**Figures 15A-15C** illustrate graphs showing a time-dependent water velocity profile according to equation (4) (**Figure 15A**), $v_h(z)$ (**Figure 15B**), and $v_l(z)$ (**Figure 15C**), according to an embodiment.
**Figure 16** illustrates a flowchart of a method for generating a seasonal-dependent model for a water velocity (i.e., speed of sound) in an ocean, according to an embodiment.
**Figure 17** illustrates a different view of the flowchart in **Figure 16,** according to an embodiment.

**Detailed Description**

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc., may be used herein to describe various elements, these elements should not be limited by these terms. These terms are used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the description of the invention herein is for the purpose of describing particular embodiments and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combination of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context.

Those with skill in the art will appreciate that while some terms in this disclosure may refer to absolutes, *e.g.*, *all* of the components of a wavefield, *all* source receiver traces, *each* of a plurality of objects, etc., the methods and techniques disclosed herein may also be performed on fewer than all of a given thing, e.g., performed on one or more components and/or performed on one or more source receiver traces. Accordingly, in instances in the disclosure where an absolute is used, the disclosure may also be interpreted to be referring to a subset.

Computing Systems

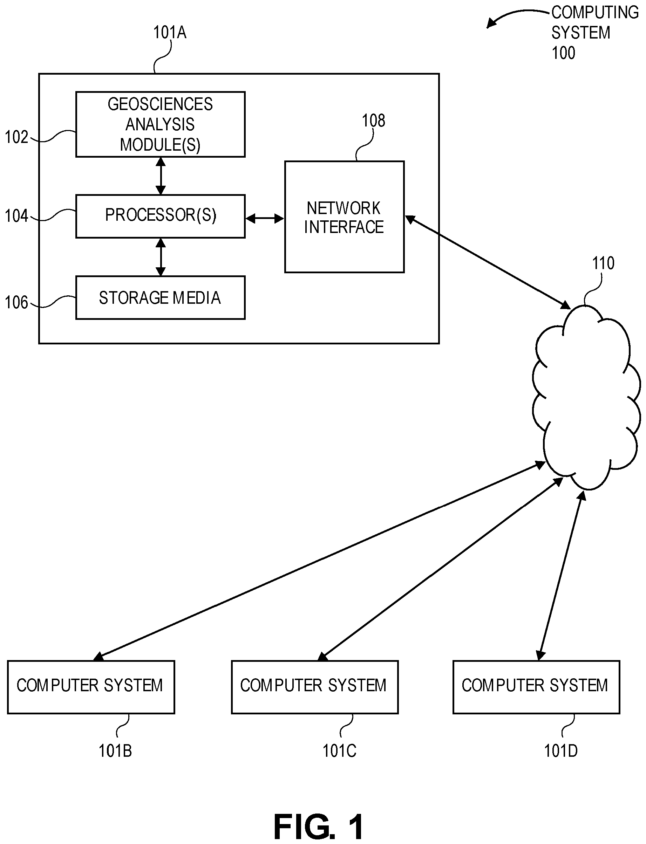

**Figure 1** depicts an example computing system 100 in accordance with some embodiments. The computing system 100 can be an individual computer system 101A or an arrangement of distributed computer systems. The computer system 101A includes one or more geosciences analysis modules 102 that are configured to perform various tasks according to some embodiments, such as one or more methods disclosed herein. To perform these various tasks, geosciences analysis module 102 executes independently, or in coordination with, one or more processors 104, which is (or are) connected to one or more storage media 106. The processor(s) 104 is (or are) also connected to a network interface 108 to allow the computer system 101A to communicate over a data network 110 with one or more additional computer systems and/or computing systems, such as 101B, 101C, and/or 101D (note that computer systems 101B, 101C and/or 101D may or may not share the same architecture as computer system 101A, and may be located in different physical locations, e.g., computer systems 101A and 101B may be on a ship underway on the ocean, while in communication with one or more computer systems such as 101C and/or 101D that are located in one or more data centers on shore, other ships, and/or located in varying countries on different continents). Note that data network 110 may be a private network, it may use portions of public networks, it may include remote storage and/or applications processing capabilities (e.g., cloud computing).

A processor can include a microprocessor, microcontroller, processor module or subsystem, programmable integrated circuit, programmable gate array, or another control or computing device.

The storage media 106 can be implemented as one or more computer-readable or machine-readable storage media. Note that while in the example embodiment of **Figure 1** storage media 106 is depicted as within computer system 101A, in some embodiments, storage media 106 may be distributed within and/or across multiple internal and/or external enclosures of computing system 101A and/or additional computing systems. Storage media 106 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs), BluRays or any other type of optical media; or other types of storage devices. Note that the instructions discussed above can be provided on one computer-readable or machine-readable storage medium, or alternatively, can be provided on multiple computer-readable or machine-readable storage media distributed in a large system having possibly plural nodes and/or non-transitory storage means. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

It should be appreciated that computer system 101A is one example of a computing system, and that computer system 101A may have more or fewer components than shown, may combine additional components not depicted in the example embodiment of **Figure 1**, and/or computer system 101A may have a different configuration or arrangement of the components depicted in **Figure 1.** The various components shown in **Figure 1** may be implemented in hardware, software, or a combination of both, hardware and software, including one or more signal processing and/or application specific integrated circuits.

It should also be appreciated that while no user input/output peripherals are illustrated with respect to computer systems 101A, 101B, 101C, and 101D, many embodiments of computing system 100 include computer systems with keyboards, mice, touch screens, displays, etc. Some computer systems in use in computing system 100 may be desktop workstations, laptops, tablet computers, smartphones, server computers, etc.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of protection.

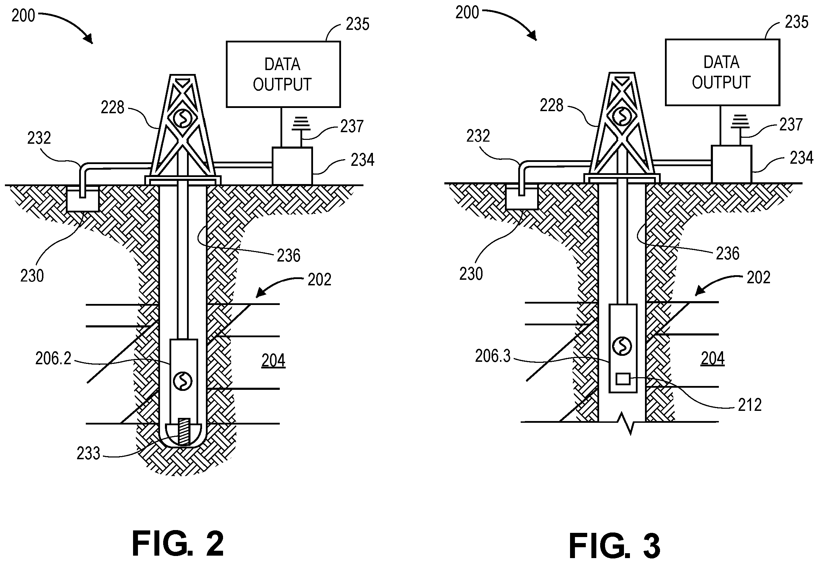

**Figures 2** and **3** illustrate simplified, schematic views of oilfield 200 having subterranean formation 202 containing reservoir 204 therein in accordance with implementations of various technologies and techniques described herein.

**Figure 2** illustrates a drilling operation being performed by drilling tools 206.2 suspended by rig 228 and advanced into subterranean formations 202 to form wellbore 236. Mud pit 230 is used to draw drilling mud into the drilling tools via flow line 232 for circulating drilling mud down through the drilling tools, then up wellbore 236 and back to the surface. The drilling mud is typically filtered and returned to the mud pit. A circulating system may be used for storing, controlling, or filtering the flowing drilling mud. The drilling tools are advanced into subterranean formations 202 to reach reservoir 204. Each well may target one or more reservoirs. The drilling tools are adapted for measuring downhole properties using logging while drilling tools. The logging while drilling tools may also be adapted for taking core sample 233 as shown.

Computer facilities may be positioned at various locations about the oilfield 200 (e.g., the surface unit 234) and/or at remote locations. Surface unit 234 may be used to communicate with the drilling tools and/or offsite operations, as well as with other surface or downhole sensors. Surface unit 234 is capable of communicating with the drilling tools to send commands to the drilling tools, and to receive data therefrom. Surface unit 234 may also collect data generated during the drilling operation and produce data output 235, which may then be stored or transmitted.

Sensors (S), such as gauges, may be positioned about oilfield 200 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 206.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 234. The bottom hole assembly further includes drill collars for performing various other measurement functions.

The bottom hole assembly may include a communication subassembly that communicates with surface unit 234. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Typically, the wellbore is drilled according to a drilling plan that is established prior to drilling. The drilling plan typically sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 234 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 234 may include transceiver 237 to allow communications between surface unit 234 and various portions of the oilfield 200 or other locations. Surface unit 234 may also be provided with or functionally connected to one or more controllers (not shown) for actuating mechanisms at oilfield 200. Surface unit 234 may then send command signals to oilfield 200 in response to data received. Surface unit 234 may receive commands via transceiver 237 or may itself execute commands to the controller. A processor may be provided to analyze the data (locally or remotely), make the decisions and/or actuate the controller. In this manner, oilfield 200 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

Figure 3 illustrates a wireline operation being performed by wireline tool 206.3 suspended by rig 228 and into wellbore 236 of Figure 2. Wireline tool 206.3 is adapted for deployment into wellbore 236 for generating well logs, performing downhole tests and/or collecting samples. Wireline tool 206.3 may be used to provide another method and apparatus for performing a seismic survey operation. Wireline tool 206.3 may, for example, have an explosive, radioactive, electrical, or acoustic energy source 244 that sends and/or receives electrical signals to surrounding subterranean formations 202 and fluids therein.

Wireline tool 206.3 may be operatively connected to, for example, geophones 218 and a computer 222.1 of a seismic truck. Wireline tool 206.3 may also provide data to surface unit 234. Surface unit 234 may collect data generated during the wireline operation and may produce data output 235 that may be stored or transmitted. Wireline tool 206.3 may be positioned at various depths in the wellbore 236 to provide a survey or other information relating to the subterranean formation 202.

Sensors (S), such as gauges, may be positioned about oilfield 200 to collect data relating to various field operations as described previously. As shown, sensor S is positioned in wireline tool 206.3 to measure downhole parameters which relate to, for example porosity, permeability, fluid composition and/or other parameters of the field operation.

While **Figures 2** and **3** illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of **Figures 2** and **3** are intended to provide a brief description of an example of a field usable with oilfield application frameworks. Part of, or the entirety, of oilfield 200 may be on land, water, and/or sea. Also, while a single field measured at a single location is depicted, oilfield applications may be utilized with any combination of one or more oilfields, one or more processing facilities and one or more wellsites.

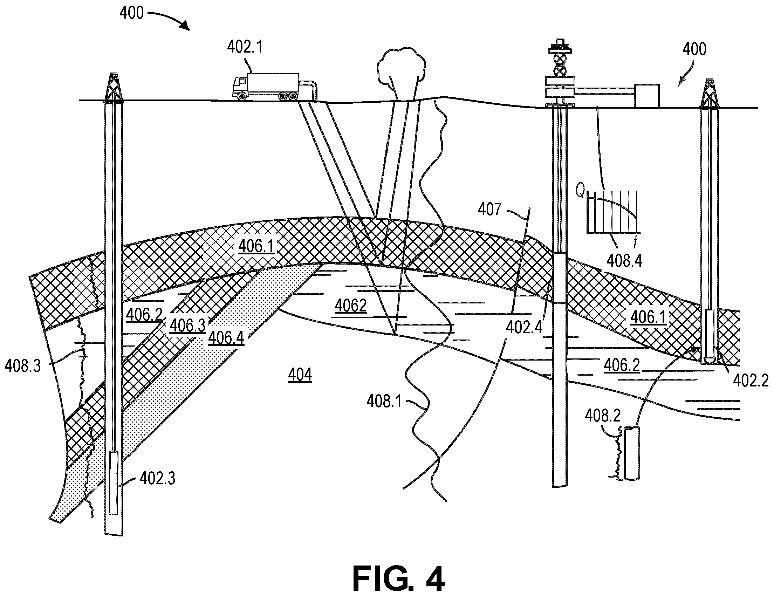

**Figure 4** illustrates a schematic view, partially in cross section of oilfield 400 having data acquisition tools 402.1, 402.2, 402.3 and 402.4 positioned at various locations along oilfield 400 for collecting data of subterranean formation 404 in accordance with implementations of various technologies and techniques described herein. As shown, data acquisition tools 502.1-502.4 generate data plots or measurements 408.1-408.4, respectively. These data plots are depicted along oilfield 400 to demonstrate the data generated by the various operations.

Data plots 408.1-408.3 are examples of static data plots that may be generated by data acquisition tools 402.1-402.3, respectively; however, it should be understood that data plots 408.1-408.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 408.1 is a seismic two-way response over a period of time. Static plot 408.2 is core sample data measured from a core sample of the formation 404. The core sample may be used to provide data, such as a graph of the density, porosity, permeability, or some other physical property of the core sample over the length of the core. Tests for density and viscosity may be performed on the fluids in the core at varying pressures and temperatures. Static data plot 408.3 is a logging trace that typically provides a resistivity or other measurement of the formation at various depths.

A production decline curve or graph 408.4 is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 404 has a plurality of geological formations 406.1-406.4. As shown, this structure has several formations or layers, including a shale layer 406.1, a carbonate layer 406.2, a shale layer 406.3 and a sand layer 406.4. A fault 407 extends through the shale layer 406.1 and the carbonate layer 406.2. The static data acquisition tools are adapted to take measurements and detect characteristics of the formations.

While a specific subterranean formation with specific geological structures is depicted, it will be appreciated that oilfield 400 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 400, it will be appreciated that one or more types of measurement may be taken at one or more locations across one or more fields or other locations for comparison and/or analysis.

The data collected from various sources, such as the data acquisition tools of **Figure 4,** may then be processed and/or evaluated. Typically, seismic data displayed in static data plot 408.1 from data acquisition tool 402.1 is used by a geophysicist to determine characteristics of the subterranean formations and features. The core data shown in static plot 408.2 and/or log data from well log 408.3 are typically used by a geologist to determine various characteristics of the subterranean formation. The production data from graph 408.4 is typically used by the reservoir engineer to determine fluid flow reservoir characteristics. The data analyzed by the geologist, geophysicist and the reservoir engineer may be analyzed using modeling techniques.

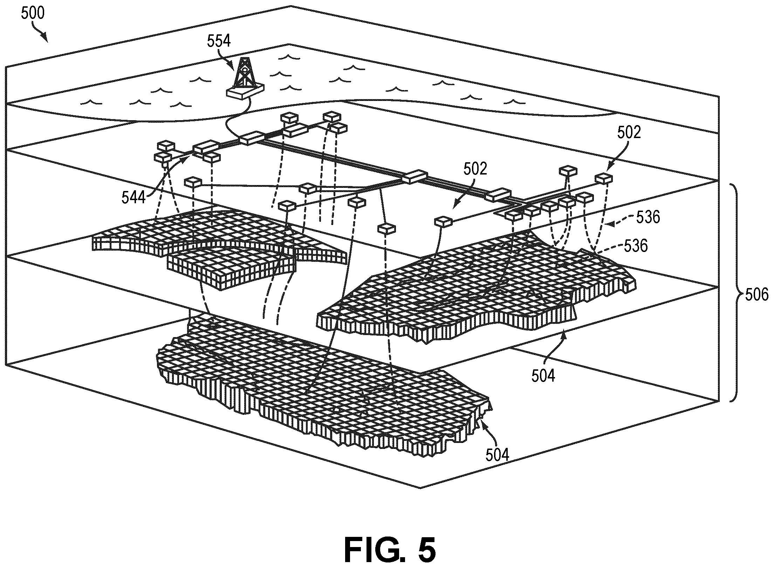

**Figure 5** illustrates an oilfield 500 for performing production operations in accordance with implementations of various technologies and techniques described herein. As shown, the oilfield has a plurality of wellsites 502 operatively connected to central processing facility 554. The oilfield configuration of **Figure 5** is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 502 has equipment that forms wellbore 536 into the earth. The wellbores extend through subterranean formations 506 including reservoirs 504. These reservoirs 504 contain fluids, such as hydrocarbons. The wellsites draw fluid from the reservoirs and pass them to the processing facilities via surface networks 544. The surface networks 544 have tubing and control mechanisms for controlling the flow of fluids from the wellsite to processing facility 554.

Attention is now directed to methods, techniques, and workflows for planning, forecasting, and/or optimizing production related systems (e.g., model selections, reservoir maps, wells, etc.) in accordance with some embodiments. Some operations in the processing procedures, methods, techniques, and workflows disclosed herein may be combined and/or the order of some operations may be changed. Those with skill in the art will recognize that in the geosciences and/or other multi-dimensional data processing disciplines, various interpretations, sets of assumptions, and/or domain models such as velocity models, may be refined in an iterative fashion; this concept is applicable to the procedures, methods, techniques, and workflows as discussed herein. This iterative refinement can include use of feedback loops executed on an algorithmic basis, such as at a computing device (e.g., computing system 100, **Figure 1**), and/or through manual control by a user who may make determinations regarding whether a given step, action, template, or model has become sufficiently accurate.

A Seasonal-Dependent Model for the Speed of Sound in the Gulf of Mexico

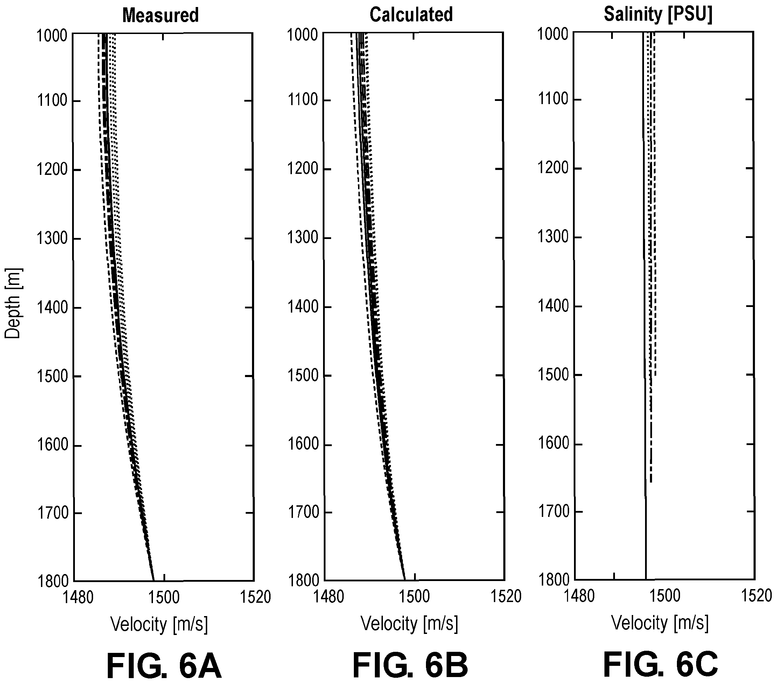

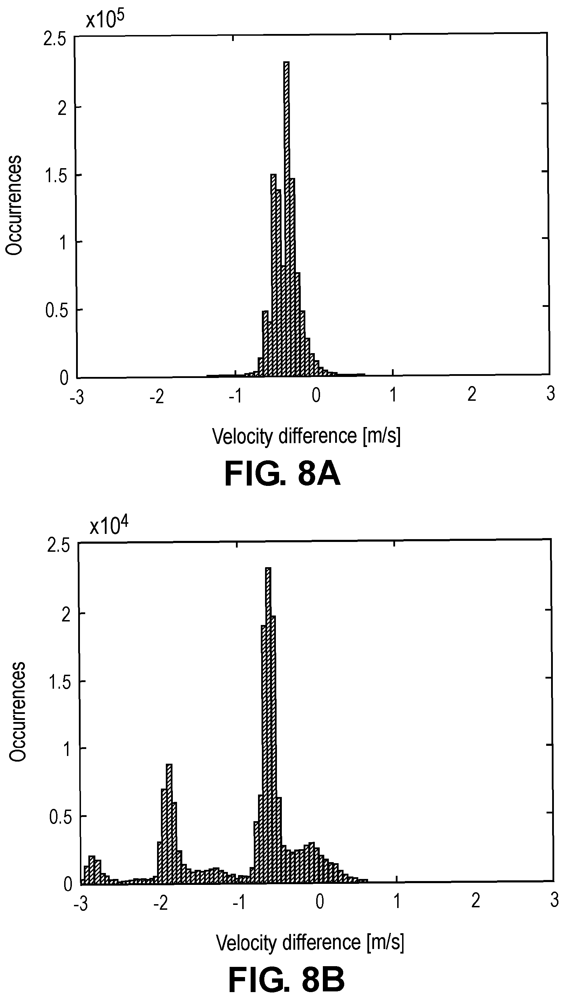

Direct measurements of the water velocity can be obtained with either pressure-temperature conductivity (PTC) and/or time-of-flight sensors. **Figures 6A-6C** illustrate graphs showing measured water velocities (**Figure 6A**), calculated water velocities (**Figure 6B**), and salinity (**Figure 6C**), according to an embodiment. **Figures 6A-6C** (and **Figures 8A** and **8B**) highlight that when the PTC sensors are properly calibrated, these two measurements provide very similar values from a depth of 1000 m. The histogram in **Figure 8A** was created with more than one million measurements simultaneously made with PTC and time-of-flight sensors (from two different brands) located on the same remotely operated vehicle (ROV). The standard deviation of the difference is less than 0.15 m/s. However, as shown in **Figure 8A,** the PTC measurements tend to give slightly higher water velocity.

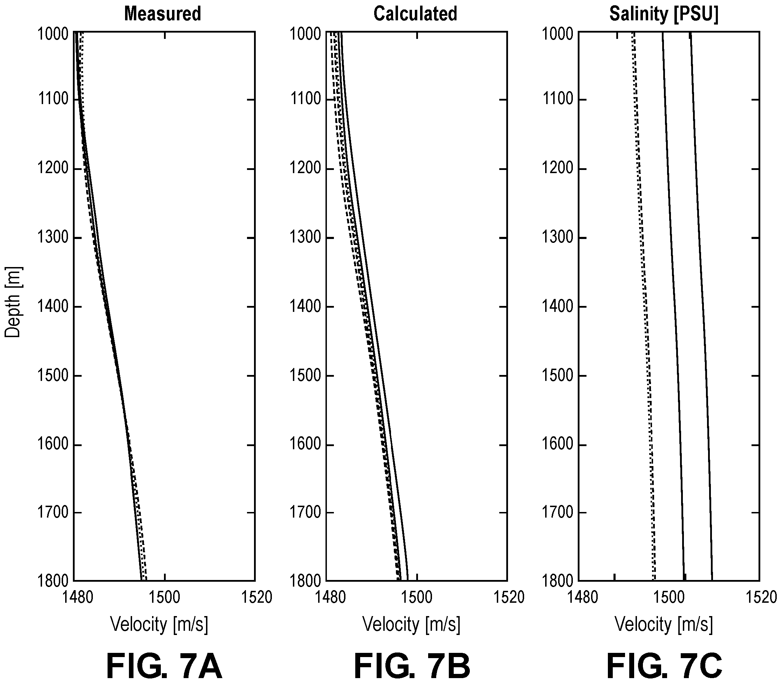

**Figures 7A-7C** illustrate graphs showing measured water velocities (**Figure 7A**), calculated water velocities (**Figure 7B**), and salinity (**Figure 7C**), according to an embodiment. However, unlike the graphs in **Figures 6A-6A,** the graphs in **Figures 7A-7C** correspond to another survey in which one of the three conductivity sensors is not well calibrated. **Figures 7A-7C** and **Figure 8B** may be created using data from a survey in which three PTC and three time-of-flight sensors are used. As mentioned above, in this example, one of the three conductivity sensors may not be properly calibrated (as shown in **Figure 7C**), causing the salinity estimation from that sensor to differ from what was obtained from the other two and from the average salinity in water deeper than 1000 m observed in other surveys. The density profile (not shown) and water velocity calculated with that PTC sensor have a bias, which is shown in **Figure 7B.**

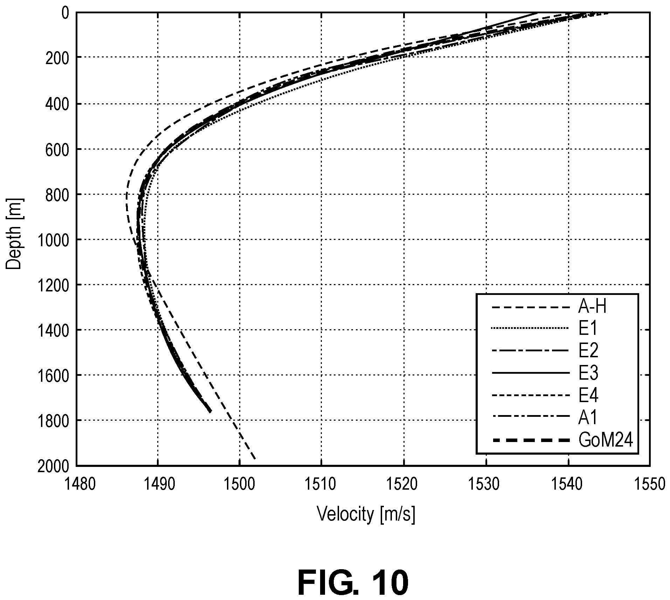

**Figures 8A** and **8B** illustrate histograms showing the difference between water velocity measured with a time-of-flight sensor and computed with PTC measurements, according to an embodiment. More particularly, the histogram in **Figure 8A** corresponds to the sensors used for the survey in **Figures 6A-6C,** and the histogram in Figure 10B corresponds to the sensors used for the survey in **Figures 7A-7C.** The histogram showing the difference in water velocity from the computed and measured values (**Figure 8B**) is multimodal, unlike the histogram shown in **Figure 8A** that corresponds to a case in which each of the sensors were accurately calibrated.

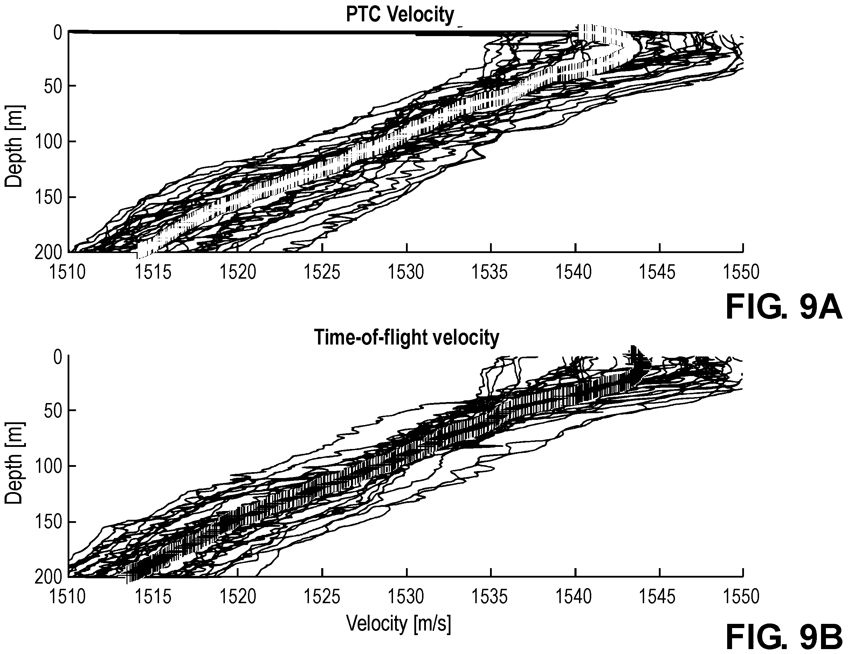

**Figures 9A** and **9B** illustrate graphs showing shallow water velocity obtained with PCT measurements (**Figure 9A**) and time-of-flight measurements (**Figure 9B**), according to an embodiment. The sensors are installed on the same ROV and deployed simultaneously. This highlights that the measurements from the latter sensors are more stable in the surface layer. Overall, the agreement between these two types of measurements is remarkably good.

*A revised water velocity profile for the Gulf of Mexico*

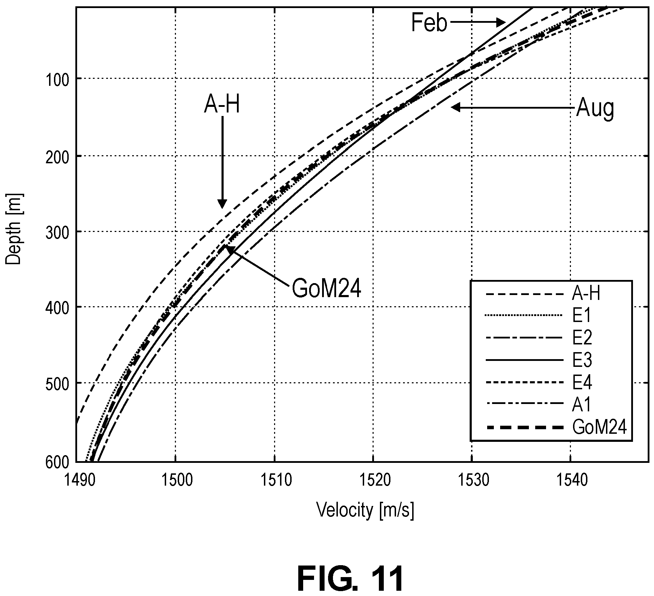

**Figure 10** illustrates water velocity profiles obtained during one or more (e.g., five) surveys, according to an embodiment. The best fitting 6th order polynomial for each survey is shown as solid line along with the A-H profile (dashed). The best-fitting polynomial function from the five surveys is shown as a dot-dashed line. A close-up for water depth down to 600 m is shown in **Figure 11. Figure 11** illustrates a close-up version of **Figure 10** for water depth down between 0 m and 600 m, according to an embodiment.

One or more velocity profiles, obtained with either PTC or time-of-flight sensors, may be used to derive the new velocity profile (referred to herein as GoM24), which is shown as the dot-dashed curve in **Figures 10** and **11.** The analysis of the PTC and time-of-flight methods has used measurements made during the down and upcast trips of the ROVs.

GoM24 crosses the A-H profile at a water depth of about 1000 m. At greater depths, GoM24 is up to 2 m/s slower than A-H. For water depths shallower than 1000 m, GoM24 is up to 1.8 m/s faster than A-H. The velocity profiles from the individual surveys, except for survey E3, are faster than A-H in the shallowest part of the seasonal thermocline layer (e.g., 10-80 m). In survey E3, most of the PTCs were taken in the middle of the winter.

The five solid lines in **Figures 10** and **11** are the best-fitting 6th order polynomial for the PTCs acquired during each individual survey. The curve labeled GoM24 is the best-fitting 6th order polynomial obtained from the individual ones. As may be seen in **Figure 9A,** the PTCs may show a decrease of the water velocity in the proximity of the sea-surface (e.g., 0-30 m) that is not captured by a 6th order polynomial.

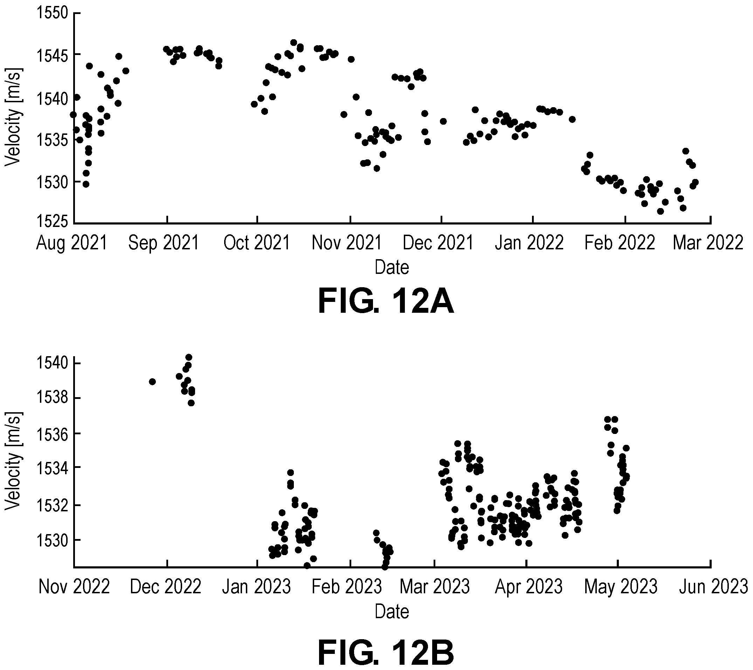

**Figures 12A** and **12B** illustrate the average water velocity measured in the shallow part of the seasonal thermocline layer (e.g., 10-80 m) in two surveys in winter 2022 (F**igure 12A**) and winter 2023 (**Figure 12B**), according to an embodiment. Seasonal variations of the water velocity in the shallowest part of the seasonal thermocline layer may be seen. Observer logs reported strong eddy currents in August 2021 that produced a sharp decline in the water velocity. Although there are short-period fluctuations, the common trend indicates that the minimum of the water velocity in the shallow part of the seasonal thermocline layer occurs approximately in mid-February.

These observations stimulate the derivation of a water velocity model that incorporates average seasonal variations. The model GoM24 may be extended using the equation:

$$GoM24(z,t) = a\varphi_0(t) +$$
$$b\varphi_1(t)z + c\varphi_2(t)z^2 + v_h(z), \quad (1)$$

where $v_h(z)$ contains the polynomial coefficients from the third order onwards of the time-independent polynomial GoM24 shown in **Figure 10**. The variables *A*, *b*, and *c* are the first three polynomial coefficients of GoM24, $\varphi_0(t)$, $\varphi_1(t)$, $\varphi_2(t)$ are time-dependent functions.

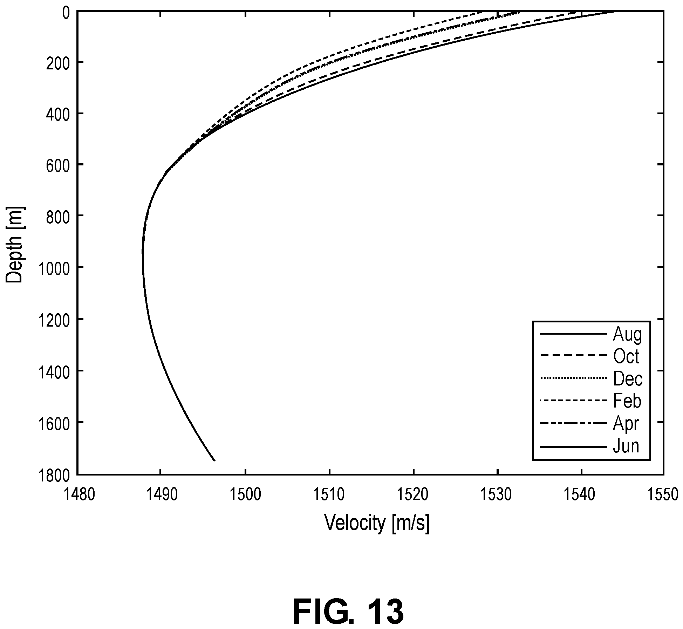

**Figure 13** illustrates seasonal-dependent water velocity profiles for the Gulf of Mexico according to the model in equation (1), according to an embodiment. **Figure 13** may be obtained using:

$$\varphi_0(t) = 1 + 0.5A\left(1 + \cos\left(\frac{2\pi t}{365} - \pi\right)\right) \quad (2)$$

with A=-0.01 to capture a maximum variation of 1% of the water velocity at the sea surface. The variables $\varphi_1(t)$ and $\varphi_2(t)$ may be derived by imposing that there are no temporal variations of water velocity below 600 m, the continuity of ***GoM24(z, t)*** and its first derivative (with respect to. depth) also at 600 m. The variable t is the difference in days from the considered day and the day at which the water velocity near the sea surface is at its maximum. A sinusoidal variation with a period of 365 days is used to obtain **Figure 13.** The minimum of the water velocity in the surface layer is assumed to be on February 15th. This is consistent with **Figures 12A** and **12B.** Consequently, the day at which the water velocity is maximum is August

15th.

Measurements of pressure, temperature, and salinity (e.g., conductivity) in the Gulf of Mexico may be scarce. However, recent measurements, which were made in different seasons, highlighted some common features that may be used to develop a new seasonal-dependent model for the water velocity. This model does not include daily variations of the water temperature and/or salinity and consequently water velocity.

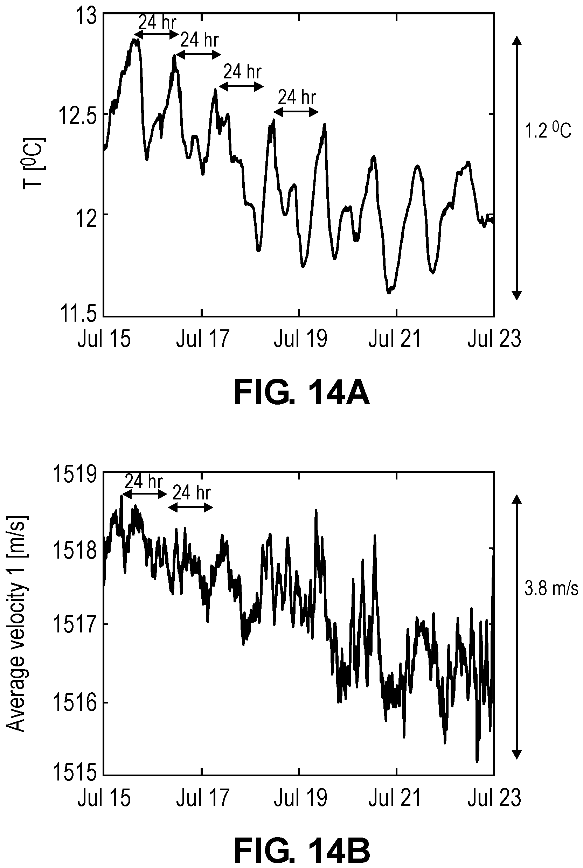

**Figures 14A** and **14B** illustrate daily variations of the water temperature (**Figure 14A**) and average water velocity (**Figure 14B**), according to an embodiment. The temperature was measured at a depth of 280 m. The average velocity was computed in the shallow part (e.g., 0-250 m). The data was acquired in July 2020 at an approximate latitude of 27.92 N, 90.96 E.

Even at this relatively large depth, a 24-hour period is clearly visible. **Figure 14B** shows the average water velocity measured at the same location using a pressure inverted echo sounder (PIES) device. The daily variations, even with some additive noise, are clearly detectable. This phenomenon indicates that high resolution 4D monitoring may be considered. These daily variations may become relevant if and when seismic processing algorithms are able to use frequencies higher than the current practice for imaging the deep-target reservoirs in the Gulf of Mexico. The correction of these daily variations is relevant in other deep-water prospects with relatively shallow targets that allow imaging with high frequencies.

Another class of perturbations that this new model does not consider are those due to meteorological events. Meteorological events, such as a tropical storm, may have an impact on water velocity that lasts for several days after that the storm passed and seismic acquisition resumed. The water velocity and seismic data measured during these surveys are relevant for the estimation of these perturbations.

The calibration of the sensors is useful for the successful usage of PTC measurements to estimate the water velocity. The analysis of several datasets acquired in the last five years has shown that the conductivity sensor is often the most relevant to calibrate in an operational setting. The analysis of several millions SVP and PTC measurements acquired in the north-west part of the Gulf of Mexico at different depths and different seasons enabled the derivation of a new seasonal-dependent model for the water velocity in Gulf of Mexico. This model for water depths shallower than 1000 m is up to 1.8 m/s faster than conventional models. Daily variations of the water velocity, which are often considered a second-order effect, may not be ignored in a deterministic approach to high-resolution seismic reservoir monitoring.

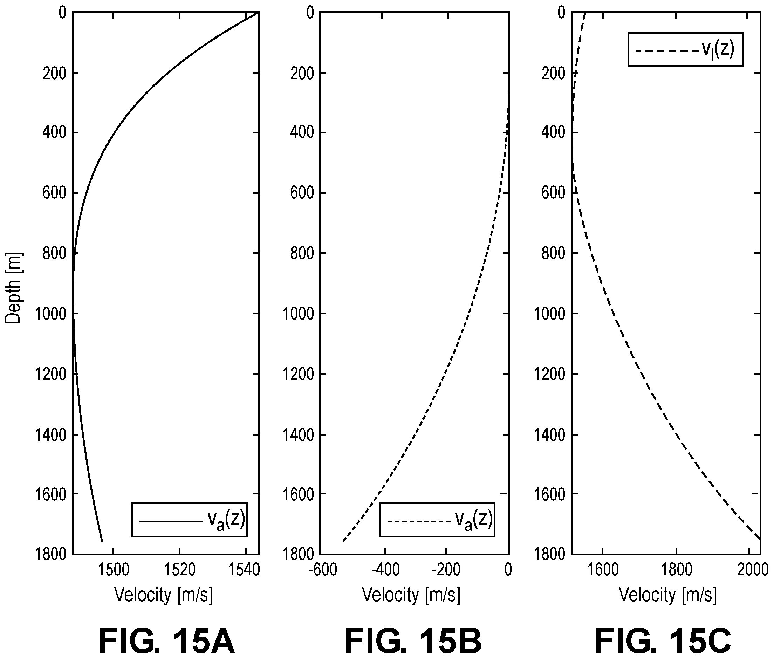

**Figures 15A-17C** illustrate graphs showing a time-dependent water velocity profile according to equation (4) (**Figure 15A**), $v_h(z)$ (**Figure 15B**), and $v_l(z)$ (**Figure 15C**), according to an embodiment. As mentioned above, equation (1) can be used for characterizing a depth and seasonal-dependent speed of sound in the ocean (i.e., water velocity). The variable $v_h(z)$, using as example a 6th order polynomial may be:

$$v_h(z) = dz^3 + ez^4 + fz^5 + gz^6, \tag{3}$$

and contains the high-order polynomial coefficients of a polynomial that approximates the water velocity as function of depth. The variable $v_h(z)$ does not depend on time and can be obtained by averaging over time all the instances of the available velocity models. An example of:

$$v_a(z) = \frac{1}{T} \int_0^T v_s(z,t)dt, \tag{4}$$

$v_h(z)$, and

$$v_l(z) = v_a(z) - v_h(z) \tag{5}$$

is shown in **Figures 15A-15C** for the Gulf of Mexico. The variable t is expressed in days, and the period T is equal to 365. The variable $v_a(z)$ may be experimentally derived using a large number of pressure-temperature-conductivity (PTC) and sound velocity profile (SVP) measurements made throughout the year.

The function $v_l(z)$ may be modulated by the three functions $\varphi_0(t) + b\varphi_1(t)z + c\varphi_2(t)z^2 + v_h(z)$ as shown in equation (1). In order to accommodate seasonal variations of the water velocity:

$$\varphi_0(t) = 1 + 0.5A\left(1 + \cos\left(\frac{2\pi t}{365} - \pi\right)\right) \tag{6}$$

where A is determined using the data available in the area of interest. In the case of the Gulf of Mexico, A=-0.01 models a maximum variation of 1% of the water velocity at the sea surface, which is in agreement with experimental data.

The variables $\varphi_1(t)$ and $\varphi_2(t)$ may be derived by imposing that there are no temporal variations of water below a given depth and the continuity of $v_s(z, t)$ and its first derivative (e.g., with respect to to depth) at the same depth. The variable $t$ is the difference in days from the day in which the water velocity is computed and the day at which the water velocity in proximity of the sea surface is maximum. A sinusoidal variation with a period of 365 days is used.

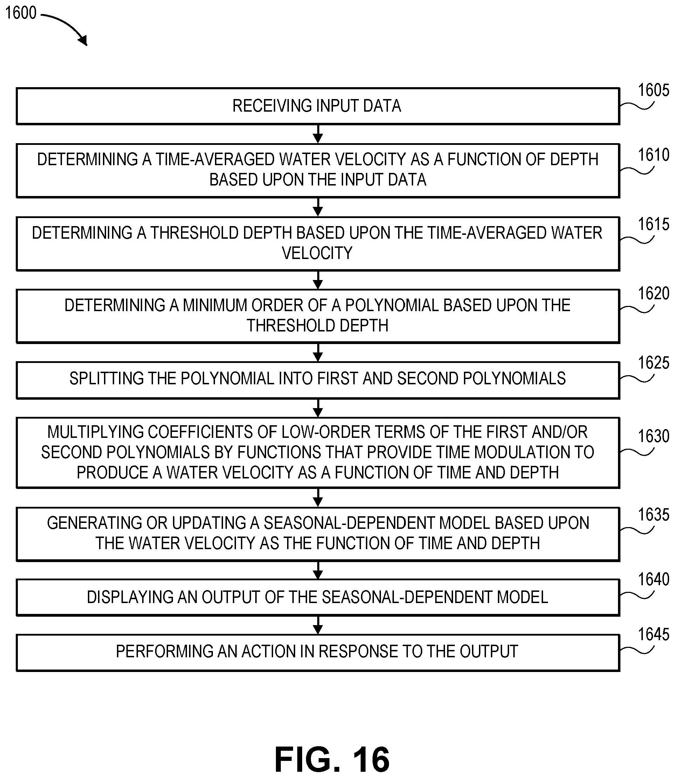

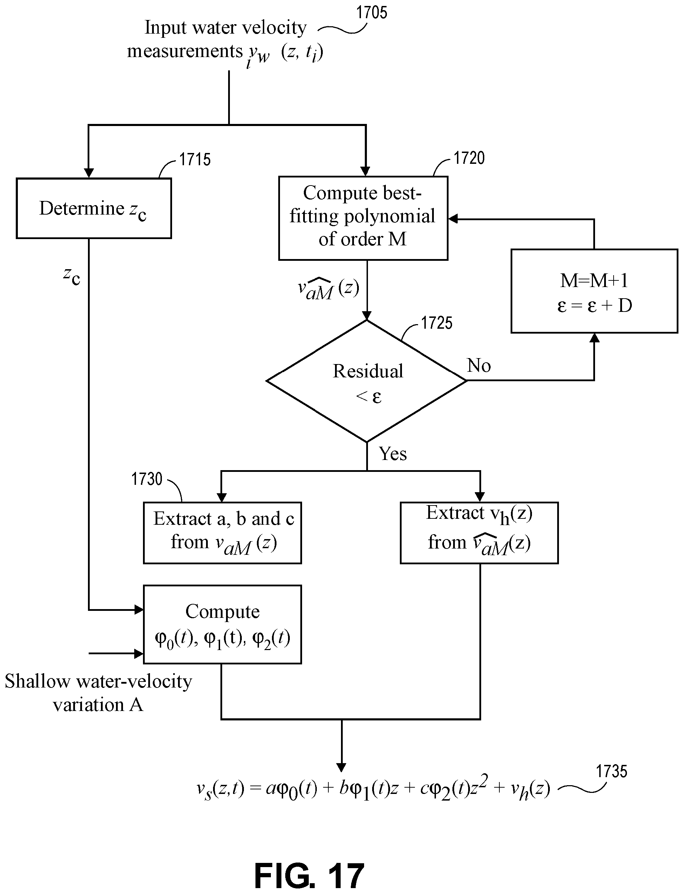

**Figure 16** illustrates a flowchart of a method 1600 for generating a seasonal-dependent model for a water velocity (i.e., speed of sound) in an ocean, according to an embodiment. An illustrative order of the method 1600 is provided below; however, one or more portions of the method 1600 may be performed in a different order, simultaneously, repeated, or omitted. At least a portion of the method 1600 may be performed with a computing system (described below). **Figure 17** illustrates a different view of the flowchart in **Figure 16,** according to an embodiment.

The method 1600 may include receiving input data, as at 1605. This is also shown at 1705 in **Figure 17.** The input data may be or include water velocity measurements in a prospect area in the ocean. The water velocity measurements may be captured directly or determined based upon seismic data. Said another way, the method 1600 may include acquiring or receiving N direct measurements of the water velocity or other (e.g., public domain) datasets in the prospect area, $v_{w_i}(z, t_i)$, and/or water velocity profiles obtained with other means (e.g., seismic data).

The method 1600 may also include determining a time-averaged water velocity as a function of depth based upon the input data, as at 1610. An example of this may include:

$$v_a(z) = \frac{1}{N(z)} \sum_{i=1}^{N(z)} v_{w_i}(z, t_i) \qquad (7)$$

The method 1600 may also include determining a threshold depth based upon the time-averaged water velocity, as at 1615. This is also shown at 1715 in **Figure 17.** Temporal variations of the time-averaged water velocity may be less than a predetermined threshold (i.e., negligible) below the threshold depth. Said another way, this may include determining the threshold depth, $z_c$, below which the temporal variations of the water velocity are negligible and can therefore be ignored. For example, considering $v_{w_i}(\hat{z}, t_i)$ as a random variable for each fixed $\hat{z}$, this threshold depth can be set to the minimum depth below which the standard deviation of $v_{w_i}(\hat{z}, t_i)$ is lower than a user-defined value (e.g. 0.1%) of $v_a(\hat{z})$.

The method 1600 may also include determining a minimum order of a polynomial based upon the threshold depth, as at 1620. This is also shown at 1720 in **Figure 17.** The minimum order of the polynomial may be a polynomial approximation of the time-averaged water velocity within a predetermined error. Said another way, this may include determining the minimum order M of the polynomial that is a sufficient approximation of $v_a(z)$. For example, this may be performed by increasing the order of the polynomial until the relative residual of the best-fitting polynomial is equal or lower to a user-define value ($\varepsilon$). For sake of simplicity, it may be assumed that M=6. The polynomial approximation of $v_a(z)$ is denoted with $\widehat{v_{aM}}(z)$.

The method 1600 may also include splitting the polynomial approximation into first and second polynomials, as at 1625. This is also shown at 1725 in **Figure 17.** The first polynomial has high-order terms that are higher than a predetermined order, and the second polynomial has low-order terms that are lower than the predetermined order. In an embodiment, the predetermined order may be equal to or greater than two. Said another way, this may include splitting $\widehat{v_{aM}}(z)$ into two polynomials in which the coefficients of the high-order terms are not function of times. The high-order polynomial is $v_h(z) = dz^3 + ez^4 + fz^5 + gz^6$. The coefficients d, e, f, and g were previously determined as the coefficients of the best-fitting polynomial.

The method 1600 may also include multiplying coefficients of the low-order terms by functions that provide time modulation to produce the water velocity as a function of time and depth $v_s(z, t)$, as at 1630. This is also shown at 1730 in **Figure 17.** The functions may be derived imposing a continuity of water velocity as the function of time and depth $v_s(z, t)$ and its derivative at the threshold depth. The functions may also or instead be derived based upon shallow-water velocity variations and the threshold depth. In an embodiment, the water velocity as the function of time and depth may be based upon (e.g., a sum of):

- A first of the coefficients of the low-order terms multiplied by a first co-sinusoidal function of time. The first co-sinusoidal function of time may be depth-independent;
- A second of the coefficients of the low-order terms multiplied by a second co-sinusoidal function of time and by the depth;
- A third of the coefficients of the low-order terms multiplied by a third co-sinusoidal function of time and by depth squared; and/or
- The high-order terms, which comprise coefficients that are a function of depth but not time.

Said another way, the coefficients (e.g., three in this example) of the low-order terms of $\widehat{v_{aM}}(z)$ may be multiplied by the functions $\varphi_0(t)$, $\varphi_1(t)$, $\varphi_2(t)$ that provide the time modulation to obtain:

$$v_l(z,t) = a\varphi_0(t) + b\varphi_1(t)z + c\varphi_2(t)z^2 \ for \ 0 \leq z \leq z_c \qquad (8)$$

The time (e.g., seasonal)-dependent polynomial may be defined as:

$$v_s(z,t) = v_l(z,t) + v_h(z), \qquad (9)$$

The function(s) $\varphi_0(t)$, $\varphi_1(t)$, $\varphi_2(t)$ may be periodic (e.g., with a period of 365 days). In an example, a sinusoidal function may be used:

$$\varphi_0(t) = 1 + 0.5A\left(1 + \cos\left(\frac{2\pi t}{365} - \pi\right)\right) \qquad (10)$$

where A may be determined using the data available in the area of interest. In the case of the Gulf of Mexico, A=-0.01 models a maximum variation of 1% of the water velocity at the sea surface which is in agreement with the experimental data.

In the equation:

$$\varphi_1(t) = f_1 \cos\left(\frac{2\pi t}{365}\right), \ \varphi_2(t) = f_2 \cos\left(\frac{2\pi t}{365}\right) \qquad (11)$$

$f_1$ and $f_2$ may be derived imposing the continuity of $v_s(z, t)$ and its depth derivative at the threshold depth $z_c$ (i.e., $v_s(z,t) = \widehat{v_{aM}}(z_c)$ and $\partial_z v_s(z,t) = \partial_z \widehat{v_{aM}}(z_c)$.

The method 1600 may also include generating or updating the seasonal-dependent model based upon the water velocity as the function of time and depth $v_s$ (z, t), as at 1635. This is also shown at 1735 in **Figure 17.**

The method 1600 may also include displaying an output of the seasonal-dependent model, as at 1640. The output may be or include the water velocity in the ocean as the function of time and depth. The output may be seasonal-dependent.

The method 1600 may also include performing an action in response to the output, as at 1645. The action may be or include generating and/or transmitting a signal that recommends, instructs, or causes a physical action to occur proximate to or in a subsea wellbore. The physical action may be or include selecting where to drill the wellbore, drilling the wellbore, varying a weight and/or torque on a drill bit that is drilling the wellbore, varying a drilling trajectory of the wellbore, or varying a concentration and/or flow rate of a fluid pumped into the wellbore.

The foregoing description, for purposes of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to explain the principles of the invention and its practical applications, to thereby enable others skilled in the art to utilize the invention and various embodiments with various modifications as are suited to the particular use contemplated.

**Claims**

1. A method for generating a model for a water velocity in an ocean, the method comprising:

    receiving input data;
    determining a time-averaged water velocity as a function of depth based upon the input data;
    determining a threshold depth based upon the time-averaged water velocity;
    determining a polynomial based upon the threshold depth;
    determining the water velocity in the ocean as a function of time and depth based upon the polynomial; and
    generating or updating the model based upon the water velocity as the function of time and depth.

2. The method of claim 1, wherein the input data comprises water velocity measurements in a prospect area in the ocean.

3. The method of claim 1 or 2, wherein temporal variations of the time-averaged water velocity are less than a predetermined threshold below the threshold depth.

4. The method of any one of the preceding claims, wherein determining the polynomial comprises determining a minimum order of the polynomial based upon the threshold depth, wherein the minimum order of the polynomial preferably is a polynomial approximation of the time-averaged water velocity within a predetermined error.

5. The method of any one of the preceding claims, further comprising splitting the polynomial into first and second polynomials, wherein the first polynomial has high-order terms that are higher than a predetermined order, and wherein the second polynomial has low-order terms that are lower than the predetermined order.

6. The method of claim 5, further comprising multiplying coefficients of the low-order terms by functions that provide time modulation to produce the water velocity as the function of time and depth, wherein the functions are preferably derived imposing a continuity of the water velocity as the function of time and depth and its derivative at the threshold depth.

7. The method of any one of the preceding claims, further comprising displaying an output of the model and/or performing an action in response to an output of the model.

8. A computing system, comprising:

   one or more processors; and
   a memory system comprising one or more non-transitory computer-readable media storing instructions that, when executed by at least one of the one or more processors, cause the computing system to perform operations, the operations comprising:

   receiving input data, wherein the input data comprises water velocity measurements in a prospect area in an ocean, wherein the water velocity measurements are captured directly or determined based upon seismic data;
   determining a time-averaged water velocity as a function of depth based upon the input data;
   determining a threshold depth based upon the time-averaged water velocity, wherein temporal variations of the time-averaged water velocity are less than a predetermined threshold below the threshold depth;
   determining a minimum order of a polynomial based upon the threshold depth, wherein the minimum order of the polynomial is a polynomial approximation of the time-averaged water velocity;
   splitting the polynomial approximation into first and second polynomials, wherein the first polynomial has high-order terms that are higher than a predetermined order, and wherein the second polynomial has low-order terms that are lower than the predetermined order;
   multiplying coefficients of the low-order terms by functions that provide time modulation to produce a water velocity as a function of time and depth; and
   generating or updating a seasonal-dependent model based upon the water velocity as the function of time and depth.

9. The computing system of claim 8, wherein the predetermined order is equal to or greater than two.

10. The computing system of claim 8 or 9, wherein the functions are derived imposing a continuity of the water velocity as the function of time and depth and its derivative at the threshold depth, and wherein the functions are also derived based upon shallow-water velocity variations and the threshold depth.

11. The computing system of any one of the claims 8 - 10, wherein the water velocity as the function of time and depth comprises a sum of:

   a first of the coefficients of the low-order terms multiplied by a first co-sinusoidal function of time, wherein the first co-sinusoidal function of time is depth-independent;
   a second of the coefficients of the low-order terms multiplied by a second co-sinusoidal function of time and by the depth; and
   a third of the coefficients of the low-order terms multiplied by a third co-sinusoidal function of time and by depth squared,
   wherein the sum preferably also comprises the high-order terms, which comprise coefficients that are a function of depth but not time.

12. A non-transitory computer-readable medium storing instructions that, when executed by one or more processors of a computing system, cause the computing system to perform operations, the operations comprising:

receiving input data, wherein the input data comprises water velocity measurements in a prospect area in an ocean, wherein the water velocity measurements are captured directly or determined based upon seismic data;
determining a time-averaged water velocity as a function of depth based upon the input data;
determining a threshold depth based upon the time-averaged water velocity, wherein temporal variations of the time-averaged water velocity are less than a predetermined threshold below the threshold depth;
determining a minimum order of a polynomial based upon the threshold depth, wherein the minimum order of the polynomial is a polynomial approximation of the time-averaged water velocity within a predetermined error;
splitting the polynomial approximation into first and second polynomials, wherein the first polynomial has high-order terms that are higher than a predetermined order, and wherein the second polynomial has low-order terms that are lower than the predetermined order, and wherein the predetermined order is equal to or greater than two;
multiplying coefficients of the low-order terms by functions that provide time modulation to produce a water velocity as a function of time and depth, wherein the functions are derived imposing a continuity of the water velocity as the function of time and depth and its derivative at the threshold depth, wherein the functions are also derived based upon shallow-water velocity variations and the threshold depth, and wherein the water velocity as the function of time and depth comprises a sum of:

a first of the coefficients of the low-order terms multiplied by a first co-sinusoidal function of time, wherein the first co-sinusoidal function of time is depth-independent;
a second of the coefficients of the low-order terms multiplied by a second co-sinusoidal function of time and by the depth;
a third of the coefficients of the low-order terms multiplied by a third co-sinusoidal function of time and by depth squared; and
the high-order terms, which comprise coefficients that are a function of depth but not time; and

generating or updating a seasonal-dependent model based upon the water velocity as the function of time and depth.

13. The non-transitory computer-readable medium of claim 12, wherein the operations further comprise displaying an output of the seasonal-dependent model, and wherein the output comprises the water velocity in the ocean and/or wherein the operations further comprise performing an action in response to an output of the seasonal-dependent model.

14. The non-transitory computer-readable medium of claim 12 or 13, wherein the action comprises generating and/or transmitting a signal that recommends, instructs, or causes a physical action to occur proximate to or in a subsea wellbore.

15. The non-transitory computer-readable medium of any one of the claims 12 - 14, wherein the physical action comprises selecting where to drill the wellbore, drilling the wellbore, varying a weight and/or torque on a drill bit that is drilling the wellbore, varying a drilling trajectory of the wellbore, or varying a concentration and/or flow rate of a fluid pumped into the wellbore.

FIG. 1

FIG. 3

FIG. 2

**FIG. 4**

EP 4 617 735 A1

**FIG. 5**

FIG. 6A

FIG. 6B

FIG. 6C

**Measured**

**Calculated**

**Salinity [PSU]**

Depth [m]

Velocity [m/s]

Velocity [m/s]

Velocity [m/s]

**FIG. 7A**

**FIG. 7B**

**FIG. 7C**

FIG. 8A

FIG. 8B

FIG. 9A

FIG. 9B

FIG. 10

**FIG. 11**

FIG. 12A

FIG. 12B

**FIG. 13**

**FIG. 14A**

**FIG. 14B**

FIG. 15A          FIG. 15B          FIG. 15C

1600

RECEIVING INPUT DATA — 1605

DETERMINING A TIME-AVERAGED WATER VELOCITY AS A FUNCTION OF DEPTH BASED UPON THE INPUT DATA — 1610

DETERMINING A THRESHOLD DEPTH BASED UPON THE TIME-AVERAGED WATER VELOCITY — 1615

DETERMINING A MINIMUM ORDER OF A POLYNOMIAL BASED UPON THE THRESHOLD DEPTH — 1620

SPLITTING THE POLYNOMIAL INTO FIRST AND SECOND POLYNOMIALS — 1625

MULTIPLYING COEFFICIENTS OF LOW-ORDER TERMS OF THE FIRST AND/OR SECOND POLYNOMIALS BY FUNCTIONS THAT PROVIDE TIME MODULATION TO PRODUCE A WATER VELOCITY AS A FUNCTION OF TIME AND DEPTH — 1630

GENERATING OR UPDATING A SEASONAL-DEPENDENT MODEL BASED UPON THE WATER VELOCITY AS THE FUNCTION OF TIME AND DEPTH — 1635

DISPLAYING AN OUTPUT OF THE SEASONAL-DEPENDENT MODEL — 1640

PERFORMING AN ACTION IN RESPONSE TO THE OUTPUT — 1645

# FIG. 16

Input water velocity $\xrightarrow{\phantom{xx}}$ 1705
measurements $v_w (z, t_i)$

Determine $z_c$ ⌐1715

Compute best-
fitting polynomial
of order M ⌐1720

$\widehat{v_{aM}}(z)$

$z_c$

Residual
$< \varepsilon$ ⌐1725

No

M=M+1
$\varepsilon = \varepsilon + D$

Yes

1730

Extract a, b and c
from $v_{aM}(z)$

Extract $v_h(z)$
from $\widehat{v_{aM}}(z)$

Compute
$\varphi_0(t), \varphi_1(t), \varphi_2(t)$

Shallow water-velocity
variation A

$v_s(z,t) = a\varphi_0(t) + b\varphi_1(t)z + c\varphi_2(t)z^2 + v_h(z)$ $\xrightarrow{\phantom{xx}}$ 1735

**FIG. 17**

EP 4 617 735 A1

Europäisches
Patentamt
European
Patent Office
Office européen
des brevets

# EUROPEAN SEARCH REPORT

**Application Number**

EP 25 16 3327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAN TSU WEI ET AL: "Passive acoustic characterization of sub-seasonal sound speed variations in a coastal oceana)", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 150, no. 4, 13 October 2021 (2021-10-13), pages 2717-2737, XP012260368, ISSN: 0001-4966, DOI: 10.1121/10.0006664 [retrieved on 2021-10-13] | 1-5,7 | INV. G01V20/00 |
| A | * abstract; figures 2,8,10 * * page 2728 * | 6,8-15 | |
| A | CN 103 927 443 A (UNIV HARBIN ENG) 16 July 2014 (2014-07-16) * abstract; claim 1; figure 2 * | 1-15 | |

TECHNICAL FIELDS
SEARCHED      (IPC)

G01V

The present search report has been drawn up for all claims

| Place of search | Date of completion of the search | Examiner |
|---|---|---|
| The Hague | 4 July 2025 | Fernandes, Paulo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................
& : member of the same patent family, corresponding
    document

EPO FORM 1503 03.82 (P04C01)

30

## ANNEX TO THE EUROPEAN SEARCH REPORT
## ON EUROPEAN PATENT APPLICATION NO.

EP 25 16 3327

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | Publication date | Patent family member(s) | Publication date |
|---|---|---|---|
| CN 103927443 A | 16-07-2014 | NONE | |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63564254